# EUROPEAN PATENT APPLICATION

(11) **EP 4 488 779 A1**
(43) Date of publication of application: **08.01.2025**
(21) Application number: 23184187.5
(22) Date of filing: 07.07.2023
(51) Int. Cl.: G05B 19/418

(54) **CAMERA-BASED ASSISTING IN ASSEMBLING COMPONENTS**

(71) Applicant: OMRON CORPORATION, Kyoto, Kyoto 600-8530 (JP)
(72) Inventor: CHOI, Chi Chung, 5234 GM 's-Hertogenbosch (NL)
(74) Representative: Horn Kleimann Waitzhofer Schmid-Dreyer Patent- und Rechtsanwälte PartG mbB

(57) **Abstract**

A method (120) for assisting a user in assembling components from one or more storage units (106) of a storage arrangement (104) into a product (102) in accordance with assembly instructions, the method (120) including: Providing (S10) an assembly sequence information indicative of one or more picking actions to be performed by a user; and Performing (S12) for each picking action: Capturing (S14) a sequence of images (122) of the storage arrangement (104); Determining (S20) one or more storage units (106) of the storage arrangement (104) as target storage units (124); Determining (S26) within each image (122) one or more target areas (126), such that a view on each target storage unit (124) corresponds to one target area (126); Determining (S28) within each image (122) one or more alert areas (130), such that each alert area (130) is located in the image within a view on the storage arrangement (104) outside of the one or more target areas (126); Detecting (S52) an alert event if an image data of any alert area (130) of a young image (122) differs from an image data of the same alert area (130) of an old image (122); Detecting (S50) a success event if an image data of any target area (126) of the young image (122) differs from an image data of the same target area (126) of an old image (122); and Outputting (S54) a message to a user interface, wherein the message is indicative of the alert event if the alert event is detected, and wherein the message is indicative of the success event if the success event is detected.

## Description

The present invention relates to a method for assisting a user in assembling components from one or more storage units of a storage arrangement into a product in accordance with assembly instructions. Further, the present invention relates to a computer program product, to an industrial control system, and to an assembly system including the industrial control system.

Document EP 3 647 890 B1 discloses an assembly system for assisting a user in assembling components into a product in accordance with assembly instructions. This assembly system comprises: at least two storage units for holding different components; machine-readable labels, each label being attached to one of the storage units and indicating a content of that storage unit; a camera unit configured to capture an image of the assembly system including the labels; and a controller configured to determine a respective position of the at least two storage units based on the image captured by the camera unit including the labels and to determine the type of components contained in the storage units using the labels of the image captured by the camera unit. The camera unit is further configured to capture an image of a hand of the user; and the controller is further configured to determine a position of the hand of the user based on the image of the hand captured by the camera unit.

Detecting a position of a hand based on an image of the hand can need a lot of resources.

Thus, it is one object of the present invention to provide a method for assisting a user in assembling components, which can operate using few computation resources.

Accordingly, a method is suggested, that is suitable for assisting a user in assembling components from one or more storage units of a storage arrangement into a product in accordance with assembly instructions. The suggested method includes: providing an assembly sequence information indicative of one or more picking actions to be performed by a user. The suggested method includes performing for each picking action at least one of the following steps a) through g):
a) capturing a sequence of images of the storage arrangement;
b) determining one or more storage units of the storage arrangement as target storage units;
c) determining within each image one or more target areas, such that a view on each target storage unit corresponds to one target area, wherein each target area is consistent throughout the sequence;
d) determining within each image one or more alert areas, such that each alert area is located in the image within a view on the storage arrangement outside of the one or more target areas;
e) detecting an alert event if an image data of any alert area of a recent or young image differs from an image data of the same alert area of an initial or elder image;
f) detecting a success event if an image data of any target area of the recent or young and/or a previous image differs from an image data of the same target area of an initial or old image; and
g) outputting a message to a user interface, wherein the message is indicative the alert event if the alert event is detected, and wherein the message is indicative of the success event if the success event is detected.

That is, in short: a camera captures a series of images and detects, if there is a change in certain areas or regions of the images between the images. If there is a change, then a user action is assumed, then this action is classed depending on the area in which a change has happened, and a message is given to a user depending on the class of the action. This area-based classification of user actions does not need difficult algorithms, but it merely needs to compare image data. Thus, the suggested method can be operate using few computation resources.

Capturing an image may be referred to as taking an image.

Image data of an area of an image, such as image data of a target area or image data of an alert area, may mean data indicative of a part of an image, which part is indicated or defined by the respective area / target area / alert area.

The provided assembly sequence information indicates one ore more picking actions, that are to be performed. Thus, a user can know from the assembly sequence information where to pick a next component. Preferably, the assembly sequence information indicates for multiple components each a picking action and an assembly action and/or assembly instruction. Thus, a user can know from the assembly sequence information where to pick a next component and how to assemble this picked component into a product. Preferably, the assembly sequence information indicates a sequence of the one or more picking actions, and more preferably of the according assembly actions, too. Preferably, the assembly sequence information indicates for each picking action one or more picking information selected from a group including: a target storage unit, a number of components to be picked, and a label information indicative of component of a storage unit.

The method may have: providing a storage arrangement view information indicative of a position of a view on one or more storage units and/or a view on the storage arrangement in the captured images. For example, a position of a camera in an assembly system may be fixed in most cases, such that this information can once be determined and stored, and can be retrieved multiple times with high reliability.

According to an option, the success event may be detected only if an alert event has not yet been detected. This option increases operational reliability, as a situation is prevented, where a user can perceive a success-indicating message although an alert-indicating message has been issued, too.

The young image may mean a recent image. The old image may mean an initial image. The terms old, recent, young, initial, and intermediate are preferably referred to each other. That is, if there is mentioned an old or initial image, there may have been captured an image before this old picture while performing this method.

According to an option, the suggested method may further include a step of determining within each image a reference area, which is located next to or at an edge of the view on the storage arrangement or within a proximity of this edge of the view on the storage arrangement. Further, the suggested method may include a step of detecting an end-of-pick event if the following conditions are both met: a) an image data of the reference area in a recent or young image corresponds to an image data of the reference area in an initial or old image, and b) an image data of the reference area in an intermediate image, that is captured at a time between the recent or young image and the initial or old image, differs from the image data of the reference area in the old image. Further, the suggested method may have that at least said detecting of the success event is performed only if the end-of-pick event is detected. Preferably, the method may include a step of providing a proximity threshold, which may be referred to as a distance threshold, and a step of: determining within each image said reference area being located within a proximity of said edge, may be a step of: determining within each image said reference area, such that a distance between an edge of the reference area and edge of the view on the storage arrangement does not exceed the proximity threshold. Thus, the reference area is located such that it a corresponds to region of the assembly system, which region a user of the assembly system crosses with his hand in order to pick a component from the storage arrangement. Thus, if a user has retreated his hand from said corresponding region, it is safe to assume that the pick is ended, and that it is an efficient time to evaluate whether the pick was performed to the correct storage unit.

A condition is preferably met if the result of an according determination is true. For example, the above condition a) is met if a determination, whether said image data of said reference area in said recent or young image corresponds to said image data of said reference area in said initial or old image, results true.

According to an option, the suggested method may further include within the steps performed for each picking action: Performing the following steps a) and b), if it is determined, that no edge of a single target area is located next to or at an edge of the view on the storage arrangement or within a proximity of this edge of the view on the storage arrangement: a) determining a muted area between this target area and the edge of the view on the storage arrangement; b) detecting the alert event also if the following conditions c) to e) are met: c) the end-of-pick event is detected, d) an image data of the muted area of any image differs from an image data of the muted area of the initial or old image, and e) no success event is detected. This option improves a situation where a target storage unit, a user is instructed to pick from, is arranged in the center of the storage arrangement. In this scenario, a wrong pick could be made to another storage unit between the user and the target storage unit. By including the image data of these one or more storage units between the user and the target storage unit into the muted area, an alert can be suspended until a correct pick is detected or raised otherwise. Thus, a user can be informed of a wrong pick with increased precision in cases where there are many storage units in the storage arrangement.

According to an option, each target area may be determined such that at least one edge of the target area is located next to or at an edge of the view on the storage arrangement or within a proximity of this edge of the view on the storage arrangement. In other words: each target area may be determined such that a distance between at least one edge of the target area and an edge of the view on the storage arrangement does not exceed a pre-defined proximity threshold. The pre-defined proximity threshold may be set to a value smaller than a size of smallest pickable component. The pre-defined proximity threshold may be set to a value smaller than 50% of a size of the smallest storage unit, preferably smaller than 30 % of the size of the smallest storage unit, and more preferably smaller than 25% of the size of the smallest storage unit. Thus, even if an edge of the target area is not perfectly aligned to an edge of the view on the storage arrangement, it can be prevented that a user accidently picks a component without being noticed.

According to an option, each alert area is determined such that each target area has at least one free edge where there is no alert area between this free edge of this target area and a corresponding edge of the view on the storage arrangement. Implementing this option can make sure that even in large storage arrangements having many storage units, there is a path to the target area in the image, where there is no alert area. This may be regarded as an algorithm for determining the target area/-s and alert area/-s, which is easy to implement. Preferably, the corresponding edge of the view on the storage arrangement may be intersected by a virtual straight line that originates in this target area and intersects this free edge. In other words, the corresponding edge of the view on the storage area may be behind the free edge when seen from a center of this target area.

According to an option, the suggested method may further include within the steps performed for each picking action: Projecting a light signal onto the storage arrangement, which visually corresponds to at least one target section in the captured images. Thus, a user does not need to memorize a complex picking sequence, but can react without any training to an instruction, which is visibly presented to him/her.

According to an option, the suggested method may further include: Detecting in an old or initial image one or more labels, which labels are configured to indicate a storage unit and/or a component held by the storage unit; wherein a position of at least one target area within each image is determined, within the steps performed for each picking action, based on a position of at least one detected label. A label may be a label. Thus, the method is enabled to react to changes in the arrangement of the storage units. This makes a resulting assembly system more dynamic and adaptable.

According to an option, the position of the at least one target area is determined, within the steps performed for each picking action, to visually spread in each image between two labels, which include a same visual information. Thus, storage units of different sizes and/or formats can be used. Also, the method becomes independent from a camera perspective as the size and location of each storage unit can be easily identified from the images itself.

According to an option, the one or more labels may be identified based on a label information, that is included in the assembly sequence information in association to the picking action. Providing all information in one assembly sequence information, such as a data set, makes the method and/or the assembly sequence easily adaptable and distributable. The same assembly sequence information may be used for differently build and/or configured assembly systems, such as large storage arrangements, wide storage arrangements, and/or small storage arrangements.

According to an option, the message, that is indicative of the success event, may be or may include an assembly instruction included in the assembly sequence information in association to the picking action. That is, the assembly sequence may have picking instructions on where to pick and assembling instructions on how to assemble a picked component. These instructions are preferably provided alternatingly. Again, the assembly sequence may be more easily exchangeable between systems.

According to a further aspect, the invention relates to a computer program product comprising instructions which, when the program is executed by a computer, cause the computer to carry out the above-described method. A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network. The embodiments and features described with reference to the suggested method of the present invention apply mutatis mutandis to this computer program product of the present invention.

According to a further aspect, the invention relates to an industrial control system for assisting a user in picking a component from a storage unit of multiple storage units, that is configured to execute the above-described method. The embodiments and features described with reference to the suggested method apply mutatis mutandis to this industrial control system. Examples for such an industrial control system include a programmable logic control unit, or PLC unit, and/or an industrial control personal computer, or industrial PC, for example.

According to still a further aspect, the invention relates to an assembly system. The suggested assembly system includes: a storage arrangement, that has and/or is configured to hold multiple storage units; a camera, that is arranged to capture an image of the storage arrangement; and the suggested industrial control system, which is described above. The embodiments and features described with reference to the suggested method and/or to the suggested industrial control system apply mutatis mutandis to this assembly system.

Optionally, the suggested assembly system may further include a projector, that is configured to project light signals onto the storage arrangement, wherein the industrial control system is configured to perform the method according to an option, which method option includes a step of: projecting a light signal onto the storage arrangement, which visually corresponds to at least one target section in the captured images. Thus, a user of this assembly system can does not need to memorize a complex picking sequence, but can react without any training to an instruction, which is visibly presented to him/her.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: schematically shows a perspective view on an assembly system according to an embodiment of the invention having an industrial control system for assisting a user in picking a component from a storage unit of multiple storage units;
- Fig. 2: schematically shows an image captured by a camera of the assembly system of Fig. 1 in a configuration where every storage unit has two labels; and
- Fig. 3: schematically shows a flow diagram of a suggested method for assisting a user in assembling components from one or more storage units of a storage arrangement into a product in accordance with assembly instructions.

In the Figures, like reference numerals designate like or functionally equivalent elements, unless otherwise indicated.

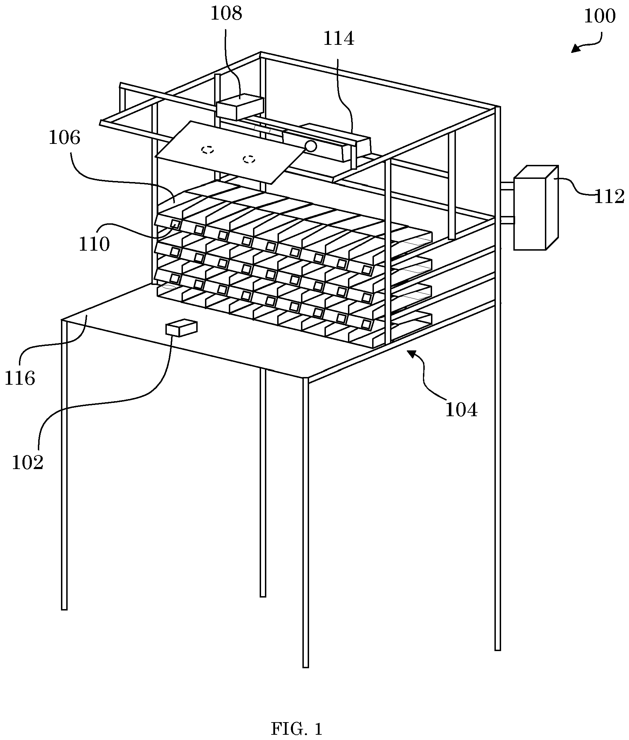

Fig. 1 schematically depicts an assembly system 100. The assembly system 100 is usable in an assembly process for assembling a product 102 from components.

The assembly system 100 includes a storage arrangement 104. The storage arrangement has multiple of storage units 106. Each storage unit 106 may be a box having an access opening in the front face, such that a user can pick a component from the box through the access opening.

The assembly system 100 further has a camera 108 mounted e.g. on top of the storage arrangement 104. The camera 108 is for example configured and arranged to capture images from the front face of the storage arrangement 104, which front face is preferably defined by it facing to a side from which a user is expected to access the storage arrangement 104. Further, the camera 108 is for example arranged and configured such that every captured image shows all storage units 106 in every single image.

There may be different ways to know where every storage unit 108 is located within the storage arrangement 104. For example, a plan may be pre-defined. However, it is preferred to have at least one label 110 arranged at that side of every storage unit 106, which side is facing towards the camera 108. In other words, there is at least one label 110 positioned on every storage unit 106 such that the one or more labels 110 are visible in an image captured from this same storage unit 106. In the example of Fig. 1, there is one label 110 per storage unit 106.

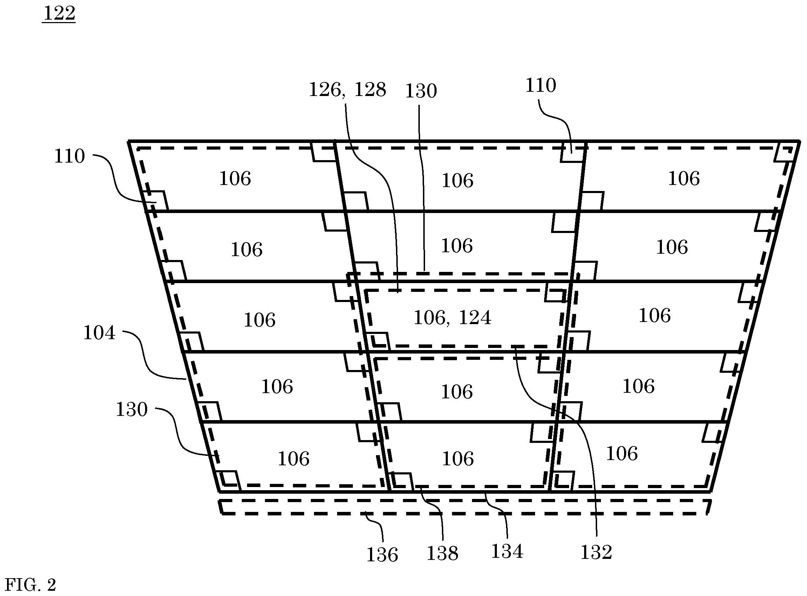

Fig. 2 shows an image captured by the camera 108. For the sake of easier illustration, the storage arrangement 104 is configured here in a 5 by 5 configuration where there are 5 rows of each 5 storage units 104.

Every storage unit 104 of Fig.2 has two labels 110 facing the camera 108. The labels 110 are located in diagonally opposite corners of the storage units 104. However, there may also be configurations where the labels 110 are disposed on opposite sides, such as a bottom left corner and a bottom right corner of each storage unit 104.

The labels 110 are configured to visually identify the storage unit 106, to which the respective label 110 is applied to. In a preferred example, the one or more labels 110 display an article number of the component(s) pickable from the storage unit 104 to which the respective label 110 is applied to. The labels 110 preferably are configured as QR-codes.

The assembly system 100 also has an industrial control system 112 configured for assisting the user in assembling components from the one or more storage units 106 of the storage arrangement 104 into the product 102. The industrial control system 112 is configured to execute a computer program product for assisting the user in assembling components from the one or more storage units 106 of the storage arrangement 104 into the product 102. When the computer program product is executed by a computer, such as by the industrial control system 112 or by a computation unit thereof, cause the computer to carry out a method 120 for assisting the user in assembling components from the one or more storage units 106 of the storage arrangement 104 into the product 102.

The industrial control system 112 is in communication with the camera 108 and a projector 114. The projector 114 is arranged and configured to project onto the front face of the storage arrangement 104 and/or onto an assembly desk 116 in front of the storage arrangement 104. For example, an image of a component to be picked may be projected onto the assembly desk 116 together with an assembly instruction on how to assemble the picked component into the product 102.

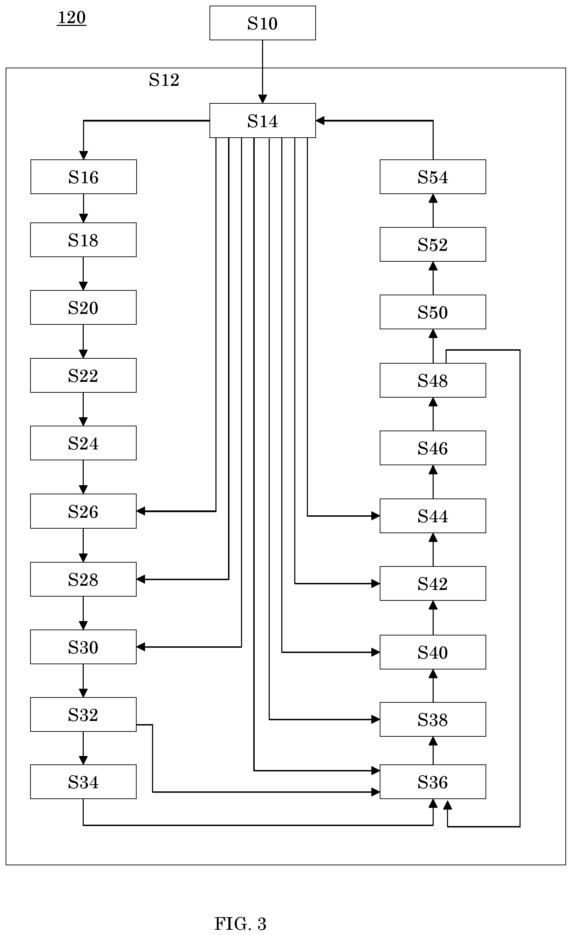

Next, an example of the method 120 for assisting the user in assembling components from the one or more storage units 106 of the storage arrangement 104 into the product 102 is explained. Reference is made especially to the flow diagram of Fig. 3 and the schematic camera image of Fig. 2.

In a first step S10, an assembly sequence information is provided. The assembly sequence information indicates one or more picking actions to be performed by a user. One may, for example, use a digital table or the like included in a data set as the assembly sequence information.

Next is a step S12 of performing a group of steps S14 to S54 for each picking action.

In a step S14, a sequence of images 122 of the storage arrangement 104 is captured. This step S14 continues and/or is repeatedly performed until the step S44 explained below. This sequence of images comprises at least an old or initial image and a young or recent image. Preferably, this sequence of images comprises at least an old or initial image, an intermediate image, and a young or recent image.

In a step S16, the labels 110 are detected in an old or initial image 122 of the captured sequence of images 122.

Then, in a step S18, the one or more labels 110 are identified based on a label information included in the assembly sequence information. For example, the label information is compared to an information visually included in each label 110.

In a step S20, one or more storage units 106 are determined as target storage units 124. In the example of Fig. 2, only one target storage unit 124 exists, for easier illustration.

In a step S22, a light signal may be projected by the projector 114 onto the storage arrangement 104 indicating to the user the target storage unit 124.

In a step S24, a proximity threshold, also referred to as a distance threshold, may be provided. The proximity threshold is a pre-defined distance value, and it is preferably set to be smaller than the smallest component in the storage unit 106 most distant from the camera 108 would appear in a captured image 122.

In a step S26, one or more target areas 126 are determined within each image 122. As the camera 108 does not move relative to the storage units 106, a position of the target area 126 is determined once and is then applied to other captured images 122. The same is true for the other areas.

In said step S26, each target area 126 is preferably determined such that one edge 128 of the target area 126 in each image 122 is located inside a view on the target storage unit 124. A distance between an edge of the view on the target storage unit 124 is smaller than the provided proximity threshold.

The position of the target area 126 within each captured image 122 is determined based on a respective position of these one or more labels 122 associated to the target storage unit 124, which are detected and/or identified.

As the light signal is projected onto the target storage unit 124, the light signal corresponds to the target area 126 in the captured images 122.

The determinations of areas in steps S26, S28, S30, and S34 are each consistent as long as the picking action indicated from the assembly instructions remains unchanged.

In a step S28, one or more alert areas 130 are determined in each captured image 122. Each alert area 130 is located in the respective image 122 within a view on the storage arrangement 104 and is located outside of the one or more target areas.

In this step S28 and since the storage arrangement 104 has the 5 by 5 configuration, each alert area 130 is determined such that each target area 126 has at least one free edge 132 where there is no alert area 130 between this free edge 132 of this target area 124 and a corresponding edge 134 of the view on the storage arrangement 104.

In a step S30, a reference area 136 is determined within each captured image 122. The reference area 136 is located in the captured images 122 outside of the view on the storage arrangement 104 but close to the edge 134, which corresponds to the free edge 132 of the target area 126.

In a step S32, it is determined whether no edge of any single target area 126 is located next to or at an edge of the view on the storage arrangement 104. That is, it is determined whether there exists a target area 126, of which every edge is not located next to or at any edge of the view on the storage arrangement 104. For example, a distance between these edges is compared to the provided proximity threshold, and if each distance between the edges of the target area 126 and the corresponding edge of the view on the storage arrangement 104 exceeds this proximity threshold, then the determination of step S32 is positive regarding this target area 126. However, other calculations may be performed as well.

If the result of the determination of step S32 is positive, that is, if the distance between these edges is present or at least is larger than the proximity threshold, the method proceeds to a step S34. Otherwise, the method may proceed to a step S36, for example. In this step S34, a muted area 138 is determined between the target area 126 and the edge 134 of the view on the storage arrangement 104, which corresponds to the free edge 132.

Next, there are performed steps to distinguish whether a user has picked a component, and whether the user has picked the component from the right storage unit 106, which is the target storage unit 124.

In a step S36, it is determined whether an image data of any alert area 130 of a recent or young image 122 differs from an image data of the same alert area 130 of an initial or old image 122. In other words, it is detected whether a change in the image information indicates a pick from a storage unit 106, that is not a target storage unit 124. The method does not analyze which wrong storage area the user has moved his hand to, nor whether the user really picked a component.

The method 120 in step S36 merely performs a comparison of the image data. Any change in the images 122 triggers this determination. Thus, step S36 needs very low computation power and is safe and reliable at the same time.

In a step S38, it is determined whether an image data of any target area 126 of a young image 122 or recent or previous image 122 differs from an image data of the same target area 126 of an initial or old image 122. Thus, it is detected whether a hand of a user is currently picking from a target storage unit 124 or has been picking from the target storage unit 124 already.

In a step S40, it is determined whether an image data of the reference area 136 in a recent or young image 122 corresponds to an image data of the reference area 136 in an initial or old image 122. This condition is true in two cases or at two times: before the user has picked a component, and after the user has picked a component. Since the reference area 136 preferably spans at least one complete edge of the view on the storage arrangement 104, the user cannot, at least not unintentionally, reach around the reference area 136. In a modification, the reference area 136 may be a frame enclosing the view on the storage arrangement 104.

In a step S42 it is determined whether an image data of the reference area 136 in an intermediate image 122, that is captured at a time between the recent or young image 122 and the initial or old image 122, differs from the image data of the reference area 136 in the initial or old image 122. That is, it is checked whether a user has already moved his hand above and/or into the storage arrangement 104.

In a step S44 it is determined whether an image data of the muted area 138 of any image 122 after an old image 122 differs from an image data of the muted area 138 of the initial or old image 122. That is, it is detected whether a user has moved his hand over and/or into a storage unit 106 located between the target storage unit 124 and an edge of the storage arrangement 104.

Next are steps for evaluating the changes in image data.

In a step S46, an end-of-pick event is detected, if the determination of step S40 returns that the user presently does not pick a component, but the determination of step S42 returns that the user has already picked a component.

In a step S48, it is decided whether to proceed with the detections of a success event or an alert event, or to proceed further with analyzing the images in steps S36 to S48. That is, if the end-of-pick event is not detected in step S46, then the method 120 proceeds with a repetition of steps S36.

In a step S50, a success event is detected, if the detection of step S38 returns that there has been a change in the image data of one of the target areas 126. That is, if the user has had his/her hand above the target storage unit 124, then it is assumed that a correct pick of a component has been performed.

In a step S52, an alert event as a consequence of an erroneous pick is detected. The alert event is triggered under two scenarios, which are separately checked:
First, an alert event is detected, if it is detected in step S36 that the image data of any alert area 130 has or had changed.
Secondly, an alert event is also detected if a change in any image data of the muted area 138 is determined in step S44, but no change in any image data of the target area 126 is detected in step S38, and the user no more interacts with the storage arrangement 104 according to step S40.

Finally, in a step S54 a message is presented to a user interface. The message indicates whether a success event is detected in step S50, or an alert event is detected in step S52. For example, if the instruction to the user, which is projected onto the assembly desk 116, changes from a description of the picking or of the component to be picked, to a description of an assembling step, then the user knows that the pick was successful. However, if the description of the component to be picked does not change or if even a warning is issued, then the user knows that the pick was incorrect.

In the end, the method 120 provides an easily implementable determination, whether a user has correctly picked the component.

The terms "initial" or "old" image 122, "intermediate" image 122, and "recent" or "young" image 122 preferably mean a time-wise relation or order between the respective images. However, it is an option and not necessary that each instance of an "initial" image 122 refer to the same image captured at the same time and thus having the same image data. In other words, there may be several "initial" or "old" images 122. The same is true for the "intermediate" images 122 and the "recent" or "young" images 122. Further, all "initial" images 122 preferably are captured earlier than each "intermediate" image 122, and all "intermediate" images 122 preferably are captured earlier than each "recent" or "old" image 122.

Although the present invention has been described in accordance with preferred embodiments, it is obvious for the person skilled in the art that modifications are possible in all embodiments.

### REFERENCE NUMERALS

- 100: assembly system
- 102: product
- 104: storage arrangement
- 106: storage unit
- 108: camera
- 110: label
- 112: industrial control system for assisting a user in assembling components from one or more storage units of a storage arrangement into a product
- 114: projector
- 116: assembly desk
- 120: method for assisting a user in assembling components from one or more storage units of a storage arrangement into a product
- 122: captured image
- 124: target storage unit
- 126: target area
- 128: edge of target area
- 130: alert area
- 132: free edge of target area
- 134: edge of a view on a storage arrangement, that corresponds to the free edge
- 136: reference area
- 138: muted area
- S10: Providing an assembly sequence information
- S12: Performing a group of steps for each picking action
- S14: Capturing a sequence of images of a storage arrangement
- S16: Detecting in an old or initial image one or more labels
- S18: Identifying the one or more labels based on a label information
- S20: Determining one or more storage units as target storage units
- S22: Projecting a light signal onto the storage arrangement
- S24: Providing a distance threshold
- S26: Determining within each image one or more target areas
- S28: Determining within each image one or more alert areas
- S30: Determining within each image a reference area
- S32: Determining if no edge of a single target area is located next to or at an edge of the view on the storage arrangement
- S34: Determining a muted area between the target area and the edge of the view on the storage arrangement
- S36: Determining if an image data of any alert area of a recent or young image differs from an image data of the same alert area of an old or initial image
- S38: Determining if an image data of any target area of the recent or young image differs from an image data of the same target area of an old or initial image
- S40: Determining if an image data of the reference area in a recent or young image corresponds to an image data of the reference area in an initial or old image
- S42: Determining if an image data of the reference area in an intermediate image, that is captured at a time between the recent or young image and the initial or old image, differs from the image data of the reference area in the initial or old image
- S44: Determining if an image data of the muted area of any image differs from an image data of the muted area of the initial or old image
- S46: Detecting an end-of-pick event
- S48: Determining if an end-of-pick event is detected
- S50: Detecting a success event
- S52: Detecting an alert event
- S54: Outputting a message to a user interface

## Claims

1. A method (120) for assisting a user in assembling components from one or more storage units (106) of a storage arrangement (104) into a product (102) in accordance with assembly instructions, the method (120) including:
Providing (S10) an assembly sequence information indicative of one or more picking actions to be performed by a user; and
Performing (S12) for each picking action:
Capturing (S14) a sequence of images (122) of the storage arrangement (104);
Determining (S20) one or more storage units (106) of the storage arrangement (104) as target storage units (124);
Determining (S26) within each image (122) one or more target areas (126), such that a view on each target storage unit (124) corresponds to one target area (126);
Determining (S28) within each image (122) one or more alert areas (130), such that each alert area (130) is located in the image within a view on the storage arrangement (104) outside of the one or more target areas (126);
Detecting (S52) an alert event if an image data of any alert area (130) of a young image (122) differs from an image data of the same alert area (130) of an old image (122);
Detecting (S50) a success event if an image data of any target area (126) of the young and/or a previous image (122) differs from an image data of the same target area (126) of an old image (122); and
Outputting (S54) a message to a user interface, wherein the message is indicative of the alert event if the alert event is detected, and wherein the message is indicative of the success event if the success event is detected.

2. The method of claim 1, wherein the success event is only detected (S50) if an alert event has not yet been detected (S52).

3. The method of any previous claim, further including:
Determining (S30) within each image a reference area (136), which is located next to or at an edge (134) of the view on the storage arrangement (104); and
Detecting (S46) an end-of-pick event if the following conditions are both met:
a) an image data of the reference area (136) in a young image (122) corresponds to an image data of the reference area (136) in an old image (122), and
b) an image data of the reference area (136) in an intermediate image (122), that is captured at a time between the young image (122) and the old image (122), differs from the image data of the reference area (136) in the old image (122);
wherein at least said detecting (S52) of the success event is performed only if the end-of-pick event is detected (S46).

4. The method of claim 3, further including within the steps (S12) performed for each picking action:
Performing the following steps, if it is determined (S32), that no edge (128, 132) of a single target area (126) is located within next to or at an edge (134) of the view on the storage arrangement (104):
Determining (S34) a muted area (138) between this target area (126) and the edge (134) of the view on the storage arrangement (104);
Detecting (S52) the alert event also if the following conditions are met:
a) the end-of-pick event is detected (S46),
b) an image data of the muted area (138) of any image (122) differs from an image data of the muted area (138) of the old image (122), and
c) no success event is detected (S52).

5. The method of any preceding claim, wherein each target area (126) is determined (S26) such that at least one edge (128, 132) of the target area (126) is located next to or at an edge (134) of the view on the storage arrangement (104).

6. The method of any preceding claim, wherein each alert area (130) is determined (S28) such that each target area (126) has at least one free edge (132) where there is no alert area (130) between this free edge (132) of this target area (126) and a corresponding edge (134) of the view on the storage arrangement (104).

7. The method of any preceding claim, further including within the steps (S12) performed for each picking action:
Projecting (S22) a light signal onto the storage arrangement (104), which visually corresponds to at least one target area (126) in the captured images (122).

8. The method of any preceding claim, further including:
Detecting (S16) in an old image (122) one or more labels (110), which labels (110) are configured to indicate a storage unit (106) and/or a component held by the storage unit (106);
wherein a position of at least one target area (126) within each image (122) is determined (S26), within the steps (S12) performed for each picking action, based on a position of at least one detected label (110).

9. The method of claim 8, wherein the position of the at least one target area (126) is determined, within the steps (S12) performed for each picking action, to visually spread in each image (122) between two labels (110), which include a same visual information.

10. The method of claim 8 or 9, further including:
Identifying (S18) the one or more labels (110) based on a label information, that is included in the assembly sequence information in association to the picking action.

11. The method of any preceding claim, further including:
wherein the message indicative of the success event is or includes an assembly instruction included in the assembly sequence information in association to the picking action.

12. A computer program product comprising instructions which, when the program is executed by a computer, cause the computer to carry out the method (120) of any preceding claim.

13. An industrial control system (112) for assisting a user in assembling components from one or more storage units (106) of a storage arrangement (104) into a product (102), that is configured to execute the method (120) of any of claims 1 to 11.

14. An assembly system (100), including:
a storage arrangement (104), that has multiple storage units (106);
a camera (108), that is arranged to capture an image (122) of the storage arrangement (104); and
the industrial control system (112) of claim 13.

15. The assembly system (100) of claim 14,
further including a projector (114), that is configured to project light signals onto the storage arrangement (104),
wherein the industrial control system (112) is configured to perform the method (120) for assisting a user according to claim 7.
